# EUROPÄISCHE PATENTSCHRIFT

(11) **EP 2 240 311 B1**
(45) Veröffentlichungstag und Bekanntmachung des Hinweises auf die Patenterteilung: **06.05.2015**
(21) Anmeldenummer: 09706547.8
(22) Anmeldetag: 30.01.2009
(51) Int. Cl.: B29C 63/04, B29C 51/14

(54) **VERFAHREN UND VORRICHTUNG ZUM HERSTELLEN EINES FORMTEILS**
PROCESS AND APPARATUS FOR PRODUCING A MOULDING
PROCÉDÉ ET APPAREIL POUR FABRIQUER UN OBJET MOULÉ

(30) Priorität: 30.01.2008 DE 102008006715
(43) Veröffentlichungstag der Anmeldung: 20.10.2010
(73) Patentinhaber: Faurecia Innenraum Systeme GmbH, 76767 Hagenbach (DE)
(72) Erfinder: SCHILLES, Wilfried, 76870 Kandel (DE)
(74) Vertreter: Schatt, Markus F.
(86) Internationale Anmeldenummer: PCT/EP2009/000619
(87) Internationale Veröffentlichungsnummer: WO 2009/095256

(56) Entgegenhaltungen:
- EP-A- 0 603 498
- EP-A- 0 637 500
- EP-A- 0 747 201
- DE-B3-102004 045 398
- US-A- 4 617 081
- US-A- 5 741 386

## Beschreibung

Die Erfindung betrifft ein Verfahren und eine Vorrichtung zum Herstellen eines Formteils insbesondere für Innenverkleidungen von Kraftfahrzeugen gemäß den anliegenden Ansprüchen 1, 13. Vorteilhafte Weiterbildungen sind in den Unteransprüchen offenbart.

Insbesondere betrifft die Erfindung ein Verfahren zum Herstellen eines Formteils insbesondere für Innenverkleidungen von Kraftfahrzeugen unter Verwendung einer Trägerschicht in Form einer Kunststoff-Fasermatte aufweisend eine Anlageseite und eine einer entgegen gesetzt zu dieser gelegene Rückseite und einer Deck- oder Dekorschicht in Form einer Kunststoff-Folie aufweisend eine Sichtseite und eine entgegen gesetzt zu dieser gelegene Rückseite, die übereinander als Anordnung in einem Werkzeug liegen. Weiterhin betrifft die Erfindung ein Verfahren zum Kaschieren eines mehrlagigen einen Umbug aufweisenden Kunststoffbauteils und insbesondere eines Formteils aus Kunststoff mit räumlichen Oberflächenkonturen insbesondere für Innenverkleidungen von Kraftfahrzeugen unter Verwendung einer Träger-Schicht und einer Dekorschicht sowie eine Vorrichtung zum Kaschieren eines mehrlagigen Kunststoffbauteils. Die Erfindung betrifft insbesondere ein Verfahren zur Herstellung eines mehrlagigen Kunststoffbauteils, bei der ein ABS- oder ein PP-Träger mit einer Dekorschicht kaschiert wird.

Aus der DE 40 07 829 A1 ist ein Verfahren zum Herstellen einer Verkleidungsplatte bekannt, u.a. aufweisend: ein gleichzeitiges Heisspressen, Zurichten und Durchstoßen eines harzimprägnierten Substrates zur Herstellung eines geformten Substrats; Auflegen eines äußeren Überzugsschichtteils auf eine Fläche des geformten Substrats unter Zwischenlage einer Schmelzklebstoffplatte dazwischen; Pressen des äußeren Überzugsschichtteiles gegen das geformte Substrat im noch heißen Zustand des geformten Substrats, um eine mit einer Überzugsschicht bedeckte, unfertige Verkleidungsplatte zu erzeugen; wobei umzubugende Randabschnitte des Überzugsschicht-Teils an den Umfangsrückabschnitten des Filzes mit Hilfe einer Haftverbindung befestigt wird.

Die DE 43 03 459 A1 offenbart eine Vorrichtung zum Kaschieren der Vorderseite eines Formteils mit einem Flächenmaterial und zum Umbugen der über das Formteil hinausstehenden Ränder des Flächenmaterials auf die Rückseite des Formteils unter Verwendung von Stempeln, durch die die überstehenden Ränder des Flächenmaterials auf die Rückseite des Formteils umgebugt und dort fixiert werden.

Die DE 197 50 285 A1 beschreibt ein Verfahren zum Kaschieren eine Trägers sowie eine Vorrichtung zum Ausführen des Verfahrens. Dabei werden eine Trägerschicht und eine Deckschicht in einer Randzone, die den Umbug bildet, durch thermoplastisches Verschweißen miteinander verbunden.

Aus der EP 0 603 498 A1 ist ein Verfahren und eine Vorrichtung zur Verbindung einer Dekor- oder Deckschicht mit einer Trägerschicht, bei dem bzw. bei der mit einem Randabschnitt einer Dekor- oder Deckschicht ein Umbug ausgebildet wird. Dabei werden die jeweils in einem von zwei voneinander getrennten Werkzeugteilen anliegende Dekorschicht und die Trägerschicht beheizt und miteinander durch ein Pressverformen verklebt. Das Pressverform-Werkzeug ist derart gestaltet, dass in diesem Zustand der Randbereich der Dekorschicht auf dem zentralen Werkzeugteil in der Ausgangsstellung gelegen ist. Weiterhin wird der äußere Randabschnitt von der Oberseite eines Umbugschiebers, der unterhalb dieses äußersten Randbereichs der Dekorschicht gelegen ist, gekühlt. Weiterhin erfolgt das Aufstellen des umzubugenden Randbereichs der Dekorschicht zusammen mit einem Randbereich der Trägerschicht dadurch, dass der Umbugschieber aus einer Stellung, in der dieser zunächst unterhalb des umzubugenden Randbereichs liegt, hochfährt und dabei die Randbereiche der Dekorschicht und der Trägerschicht zusammen mit dem umzubugenden Randabschnitt der Dekorschicht aufgestellt. Durch Verfahren des Umbugschiebers in Richtung zum Mittelpunkt des zentralen Verformungswerkzeugs erfolgt ein Nach-Innen-Drücken des äußeren Randabschnitts der Dekorschicht und somit die Formung des Umbugs. Anschließend wird der umgebugte Randabschnitt mit der Rückseite des Schiebers auf die Rückseite des Trägerteils aufgepresst. Dieses Verfahren geht aus von bereits gehärteten und in sich formstabilen Trägerschicht und Dekorschicht. Die Umbugbildung hängt in ihrem Ablauf von der Formgebung eines der Werkzeugteile ab, da der Randabschnitt der Dekorschicht durch das Aufpressen der Trägerschicht aufgestellt wird. Wenn das herzustellende Bauteil am Randbereich jedoch keine entsprechende Krümmung aufweisen soll, die eines solche speziell Gestaltung des jeweligen Werkzeugteils erlaubt, ist die Aufstellung und das Umbugen des Randbereichs der Dekorschicht nur mit größerem Aufwand und mit wahrscheinlicher Bechädigung der Sichtseite der Dekorschicht möglich. Auch ist ein Verkleben oder Vechweißen des umgebugten Abschnitts der Dekorschicht mit der Rückseite der Trägerschicht mit diesem Verfahren nicht oder nur sehr unkontrolliert möglich, wenn gleichzeitig die Sichtseite der Dekorschicht mit Sicherheit nicht beeinträchtigt werden darf.

Die EP 0 792 734 A2 beschreibt ein Verfahren zum Herstellen eines Formteiles mit von Beleg- oder Dekormaterial bedeckter Oberfläche durch Hinterspritzen des in einem Formteilhohlraum eingelegten Beleg- oder Dekormaterials mit einem Kunststoff und Umbugen des Beleg- oder Dekormaterialendes, wobei das Beleg- oder Dekormaterialende nach dem Umbug-Spritzvorgang durch Eindrücken in das noch plastisch verformbare Formteil befestigt wird. Dabei wird das Beleg- oder Dekormaterialende während des Hinterspritzvorganges außerhalb des Formteilhohlraumes auf seinen entgegen gesetzt zueinander gelegenen Oberflächenseiten durch einen inneren und einen äußeren Schieber gehalten. Die Formung des Umbugs erfolgt in einem ersten Schritt durch die beiden Schieber und in einem zweiten Schritt nach Entfernen des inneren Schiebers durch Weiterfahren des äußeren Schiebers.

Die US 4 617 081 offenbart eien Vorricthung zur Herstellung eines Umschlags für scheibenförmige Datenträger, die über ein Dregelenk miteinnder gekoppelte und zusammenfaltbare Platten aufweist. Eine derartige Vorrichtung ist auch aus der US 4 272 235 bekannt.

Aufgabe der Erfindung ist, ein Verfahren und eine Vorrichtung zur Bildung eines Umbugs an einem zumindest zweischichtigen Ausgangsmaterial aus Kunststoff und ein Verfahren zur Kaschierung eines mehrlagigen Kunststoffbauteils mit einer Umbugbildung an demselben bereitzustellen, mit dem bzw. mit der jeweils ein Umbug hoher Qualität und insbesondere Genauigkeit mit einem gleichzeitig effizienten Verfahrensablauf erreichbar ist.

Diese Aufgabe wird mit den Merkmalen der unabhängigen Ansprüche gelöst. Weitere Ausführungsformen sind in den auf diese rückbezogenen Unteransprüchen angegeben.

Nach einem Ausführungsbeispiel der Erfindung ist ein Verfahren zum Kaschieren eines Formteils aus Kunststoff mit räumlichen Oberflächenkonturen insbesondere für Innenverkleidungen von Kraftfahrzeugen unter Verwendung einer Trägerschicht und einer Dekorschicht vorgesehen, die als Anordnung in einem Werkzeug liegen, wobei die Dekorschicht mit ihrer Sichtseite auf einem Werkzeugteil des Werkzeugs aufliegt und die Trägerschicht mit einer ersten Seite auf der Rückseite der Dekorschicht aufliegt, wobei sich ein als Umbugbereich vorgesehener Randbereich der Dekorschicht mit einem freiliegenden Rückseitenbereich über den diesem naheliegenden entsprechenden Rand der Trägerschicht hinaus erstreckt, mit den Schritten:
▪ Beheizen eines Heizwerkzeugs und Anlegen des beheizten Heizwerkzeugs an den freiliegenden Rückseitenbereich des Umbugbereichs der Dekorschicht und Aufschmelzen eines Teils der Dekorschicht entlang des freiliegenden Rückseitenbereichs mittels des Heizwerkzeugs,
▪ Umlegen des Umbugbereichs um den naheliegenden Rand der Trägerschicht und Auflegen des Umbugbereichs mit seinem aufgeschmolzenen Rückseitenbereich auf die zur ersten Seite entgegengesetzt gelegenen zweiten Seite der Trägerschicht und Aufpressen des Umbugbereichs auf die Trägerschicht,
▪ Entnahme der Anordnung aus Trägerschicht und Dekorschicht mit dem auf die zweite Seite der Trägerschicht aufgelegten Umbugbereich der Dekorschicht aus dem Werkzeug.

Nach einem weiteren Ausführungsbeispiel der Erfindung ist ein Verfahren zum Herstellen eines Formteils insbesondere für Innenverkleidungen von Kraftfahrzeugen vorgesehen unter Verwendung einer Trägerschicht in Form einer Kunststoff-Fasermatte, aufweisend eine Anlageseite und eine entgegen gesetzt zu dieser gelegene Rückseite, und einer Deck- oder Dekorschicht in Form einer Kunststoff-Folie aufweisend eine Sichtseite und einer entgegen gesetzt zu dieser gelegene eine Rückseite, die übereinander als Anordnung in einem Werkzeug liegen,
▪ Einlegen der Deck- oder Dekorschicht und der Trägerschicht zwischen zwei Werkzeugteile eines Werkzeugs, wobei die Deck- oder Dekorschicht mit ihrer Sichtseite auf einem ersten Werkzeugteil und die Trägerschicht mit der Rückseite an dem zweiten Werkzeugteil anliegt, so dass die Verbindungsseiten der Deck- oder Dekorschicht und der Trägerschicht aneinander anliegen, wobei sich ein entlang zumindest eines Abschnitts des Außenrands der Deck- oder Dekorschicht verlaufendes Randstück derselben über den entlang diesem verlaufenden Abschnitt des Außenrands der Trägerschicht unter Ausbildung eines freiliegenden Rückseitenbereichs hinaus erstreckt,
▪ Beheizen eines Heizwerkzeugs und Annähern des beheizten Heizwerkzeugs an den freiliegenden Rückseitenbereich des für die Umbugbildung vorgesehenen Randstücks der Deck- oder Dekorschicht über einen vorbestimmten Zeitabschnitt derart, dass das Randstück entlang des freiliegenden Rückseitenbereichs aufgeschmolzen wird,
▪ Bewegen des Umbugschiebers von einer Stellung, in der eine Oberseite des Umbugschiebers an der Sichtseite des sich über den Außenrandabschnitt der Trägerschicht hinaus erstreckenden Randstücks der Deck- oder Dekorschicht anliegt, in eine Stellung, in der eine entgegen gesetzt zu der Oberseite gelegene Unterseite des Umbugschiebers einen Abschnitt der Deck- oder Dekorschicht auf den Außenrand der Trägerschicht aufdrückt, wobei das Randstück in Richtung von dessen Umbugstellung geschwenkt wird,
▪ Bewegen des Umbugschiebers in eine Stellung, in der eine Seite des Umbugschiebers an der Sichtseite der Deck- oder Dekorschicht anliegt, wobei der Umbugschieber derart in diese Stellung bewegt wird, dass das sich über den Außenrandabschnitt der Trägerschicht hinaus erstreckende Randstück der Deck- oder Dekorschicht mit seiner aufgeschmolzenen Rückseite an der Rückseite der Trägerschicht anliegt; und
▪ Anpressen des Umbugschiebers an die Sichtseite des umgebugten Randstücks des Umbugbereichs gegen die Trägerschicht zur Verklebung der Deck- oder Dekorschicht mit der Trägerschicht im umgebugten Bereich.

Anschließend erfolgt eine Entnahme der Anordnung aus Trägerschicht und Deck- oder Dekorschicht mit dem auf die zweite Seite der Trägerschicht aufgelegten Umbugbereich der Deck- oder Dekorschicht aus dem Werkzeug.

Das Erwärmen oder Erhitzen des freiliegenden Rückseitenbereichs des für die Umbugbildung vorgesehenen Randstücks der Deck- oder Dekorschicht kann mittels eines Heizwerkzeugs und mittels insbesondere eines Heizbands erfolgen.

Das erfindungsgemäße Verfahren ist insbesondere mit einem Presseverformwerkzeug bzw. Pressverforumgsverfahren möglich, bei dem die Deck- oder Dekorschicht und die Trägerschicht als mattenförmige Schichten in das Pressverform-Werkzeug und derart in das Pressverform-Werkzeug eingelegt werden, dass das sich über den Außenrandabschnitt der Trägerschicht hinaus erstreckende Randstück der Deck- oder Dekorschicht mit dem freiliegenden Rückseitenbereich außerhalb der Presskonturflächen der Werkzeugteile liegt, und dass vor dem Bewegen des Umbugschiebers zwischen zwei Werkzeugteile eines Werkzeugs die Deck- oder Dekorschicht und die Trägerschicht durch die zwei Werkzeugteile des Pressverform-Werkzeugs unter Anwendung von Druck und Temperatur miteinander verbunden werden.

Alternativ ist das erfindungsgemäße Verfahren ist insbesondere mit einem Presseverformwerkzeug bzw. Pressverforumgsverfahren möglich, bei dem die Deck- oder Dekorschicht und die Trägerschicht als erstarrte und miteinander verbundene Schichten verwendet werden und auf ein Werkzeugteil aufgelegt werden, wobei insbesondere vorgesehen ist, dass die Dekorschicht mit seiner Sichtseite auf dem Werkzeugteil aufliegt.

Nach einem Ausführungsbeispiel kann das erfindungsgemäße Verfahren in einem Pressverformwerkzeug erfolgen. Dadurch braucht für die Umbugbildung kein eigenes Werkzeug verwendet werden. Auch ist kein Werkzeug-Wechsel nötig, wenn eine Pressverformung und eine Umbugbildung an demselben Bauteil vorzusehen ist, so dass Kosten für das Umbugwerkzeug entfallen und auch die Herstellungszeit für die Herstellung des Bauteils verkürzt wird.

Bei dem erfindungsgemäßen Verfahren kann vorgesehen sein, dass die Deck- oder Dekorschicht und die Trägerschicht als gehärtet und miteinander durch ein Pressverformverfahren verbundene Schichten in die Werkzeugteile eingelegt werden.

Erfindungsgemäß kann vorgesehen sein, dass Deck- oder Dekorschicht und die Trägerschicht derart gestaltet sind, dass die Breite des zwischen dem Außenrand der Trägerschicht und dem Außenrand der Deck- oder Dekorschicht erstreckende freiliegenden Rückseitenbereichs derselben eine Breite von 5,0 mm bis 25,0 mm hat.

Erfindungsgemäß kann als Ausgangsmaterial für die Trägerschicht eine Polypropylen (PP)-gebundene Fasermatte verwendet werden und/oder kann die Deck- oder Dekorschicht aus einer Folienschicht gebildet sein

Weiterhin kann vorgesehen sein, dass die Deck- oder Dekorschicht aus TPO (Thermoplast-Polyolefin) oder aus PVC (Polyvinylchlorid) gebildet ist.

Die Deck- oder Dekorschicht kann aus einer Deckfolie und einer aus Polypropylen (PP) gebildeten Schaumschicht gebildet sein, die die Rückseite bildet, wobei die Schaumschicht der Deck- oder Dekorschicht (12) insbesondere aus Polypropylen (PP) gebildet sein kann.

Bei dem erfindungsgemäßen Verfahren kann insbesondere vorgesehen sein, dass die Deckfolie der Deck- oder Dekorschicht eine Dicke von 0,3 mm bis 0,7 mm hat und die Schaumschicht der Deck- oder Dekorschicht eine Dicke von 1,0 mm bis 3,0 mm hat.

Das verwendete Heizwerkzeug kann insbesondere ein Heizband sein und das Beheizen eines Heizwerkzeugs kann durch Widerstandsheizen erfolgen.

Bei dem erfindungsgemäßen Verfahren kann vorgesehen sein, dass bei dem Annähern des beheizten Heizwerkzeugs an den freiliegenden Rückseitenbereich des für die Umbugbildung vorgesehenen Randstücks der Deck- oder Dekorschicht die Oberseite des Umbugschiebers an der Sichtseite des sich über den Außenrandabschnitt der Trägerschicht hinaus erstreckenden Randstücks der Deck- oder Dekorschicht anliegt.

Erfindungsgemäß kann das Annähern des beheizten Heizwerkzeugs an den freiliegenden Rückseitenbereich des für die Umbugbildung vorgesehenen Randstücks der Deck- oder Dekorschicht auch das Anlegen und Kontaktieren des Heizwerkzeugs an bzw. mit dem freiliegenden Rückseitenbereich beinhaltet.

Erfindungsgemäß kann die Deckfolie der Deck- oder Dekorschicht insbesondere eine Dicke von 0,3 mm bis 0,7 mm haben und die Schaumschicht der Deck- oder Dekorschicht eine Dicke von 1,0 mm bis 3,0 mm haben. Weiterhin kann vorgesehen sein, dass das Heizwerkzeug auf den freiliegenden Rückseitenbereich derart aufgedrückt wird, dass die Schaumschicht eine Dicke von 0,1 bis 0,2 mm erhält.

Bei einem weiteren Ausführungsbeispiel des erfindungsgemäßen Verfahrens zum Herstellen eines Formteils kann vorgesehen sein, dass bei dem Aufschmelzen des Randstücks der Deck- oder Dekorschicht das der Rückseite des Trägerschicht zugewandte Werkzeugteil auf eine Temperatur zwischen 100 und 170 Grad Celsius erwärmt wird, wobei dabei der Abstand zwischen der Außenseite des Werkzeugteils und der Rückseite der Trägerschicht zwischen 1,0 und 10,0 Mm beträgt.

Das Umlegen des Umbugbereichs um den naheliegenden Rand der Trägerschicht kann mittels eines Umbugschieberes oder Schiebers erfolgen. Weiterhin kann der Schieber zum Umlegen des Umbugbereichs um den naheliegenden Rand der Trägerschicht von dem Inneren des Werkzeugs gesehen von außen entlang der der Dekorschicht zugewandten Werkzeugkontur des ersten Werkzeugsteils auf den Umbugbereich der Dekorschicht zu bewegt wird.

Die Werkzeugkontur des ersten Werkzeugs kann derart gestaltet sein und der Schieber kann eine Oberfläche derart aufweisen, dass der Schieber zum Umlegen des Umbugbereichs derart bewegt wird, dass der Umbugbereich um den dem Schieber nahe gelegenen Rand der Trägerschicht klappt. Dabei kann das Umlegen des erwärmten Umbugbereichs mittels eines von einer Seite des Werkzeugs an den Rand des Umbugbereichs heranfahrenden Schiebers erfolgen, der derart bewegt wird, dass nach der Berührung des Schiebers mit dem als Umbugbereich vorgesehenen Randbereich dieser durch Weiterbewegen des Schiebers auf die Rückseite der Trägerschicht umgelegt wird.

Der Schieber kann dabei in einer Ausgangslage vor der Umbugbildung derart auf dem Außenbereich des ersten Werkzeugs liegen, dass dessen Spitze zum Inneren des ersten Werkzeugteils gerichtet ist, dass der Schieber entlang der Oberseite des ersten Werkzeugteils bewegt wird, so dass bei dieser Bewegung der Randbereich von der schräg verlaufenden Kontur aufgenommen und von dem ersten Werkzeugteil abgehoben wird, und dass der Schieber derart weiter bewegt wird, dass der Randbereich auf die Rückseite der Trägerschicht umgelegt wird. auf der die ein Umlegen eines überstehenden Umbugbereichs der Dekorschicht über den Rand der Trägerschicht erfolgen kann. Weiterhin kann vorgesehen sein, dass der Schieber nach dem Umlegen des Randbereichs auf die Rückseite der Trägerschicht derart weiter bewegt wird, dass dessen Rückseite den auf der Rückseite der Trägerschicht liegende Randbereich der Dekorschicht auf die Trägerschicht gepresst wird.

In einem weiteren Verfahrensschritt kann vorgesehen sein, dass der Schieber mit seiner Unterseite auf die auf der Sichtseite der Dekorschicht gelegenen Seite des Randbereichs gedrückt wird, um den Randbereich auf die Rückseite der Trägerschicht zu drücken.

Nach dem erfindungsgemäßen Verfahren kann auch vorgesehen sein, dass vor dem Umlegen des erwärmten Umbugbereichs die Anordnung aus der Trägerschicht und der Dekorschicht zwischen zwei Werkzeugteilen eines Werkzeugs gelegen sind und ein Fixieren der Anordnung aus der Trägerschicht und der Dekorschicht durch Zusammenpressen der beiden Werkzeugteile erfolgt.

Weiterhin kann vorgesehen sein, dass während des Aufschmelzens des Umbugbereichs an der freiliegenden Oberfläche der Schaumschicht der Dekorschicht mit dem beheizten Werkzeugteil sich die Werkzeugteile in einem die Anordnung aus der Trägerschicht und der Dekorschicht zusammen pressenden Zustand befinden.

Weiterhin kann vorgesehen sein, dass vor dem Umlegen des erwärmten Umbugbereichs der sich über den Rand der Trägerschicht hinaus erstreckende Umbugbereich durch Beschnitt der Dekorschicht mittels einer Schneid-Vorrichtung entsteht. Dabei kann das Beschneiden der Dekorschicht mittels der Schneid- Vorrichtung gleichzeitig mit dem Erwärmen des Umbugbereichs erfolgen.

Das Beheizen des Umbugbereichs kann insbesondere durch Widerstandsheizen und/oder mittels Heizpatronen erfolgen. Die Trägerschicht kann z.B. aus Polypropylen oder ABS gebildet sein. In jedem Fall kann die Dekorschicht aus einer Schaumschicht und einer Folie oder einer textilen Schicht gebildet sein. Insbesondere kann die Dekorschicht eine Kompakt-Folie sein.

Nach einem weiteren Aspekt der Erfindung ist eine Vorrichtung zum Kaschieren eines Formteils aus Kunststoff mit räumlichen Oberflächenkonturen insbesondere für Innenverkleidungen von Kraftfahrzeugen unter Verwendung einer Trägerschicht und einer Dekorschicht vorgesehen, aufweisend: zwei Werkzeugteile zur Aufnahme einer Anordnung aus zwei Schichten mit einem Umbugschieber oder Schieber, und eine Bewegungsmechanik, mit der der Schieber durch Betätigung einer Betätigungsvorrichtung entlang der Werkzeugkontur des ersten Werkzeugs bewegbar ist. Die Bewegungsmechanik kann insbesondere derart ausgeführt sein, dass der Schieber eine tranlsatorische Bewegung überlagert von einer Drehbewegung ausführen kann.

Dabei kann eine Bewegungsmechanik und eine Betätigungsmechanik vorgesehen sein, mit denen die Geschwindigkeit des Schiebers bei der Bewegung entlang der Werkzeugkontur des ersten Werkzeugs eingestellt werden kann.

Der Schieber oder Umbugschieber kann eine Unterseite (und eine von dieser ausgehende schräg verlaufender Kontur mit zwischen diesen gelegene Spitze aufweisen, so dass die Unterseite und die schräg verlaufende Kontur einen keilförmigen Schieber-Querschnitt bilden. Die spitez kann insbesoner Keilförmig gebildet sein. Die Spitze kann abschnittsweise in der bestimmungsgemäßen Zustellrichtung deselben gesehen eine konvex verlaufende Oberseite aufweisen.

Weiterhin kann die Bewegungsmechanik zur Bewegung des Schiebers derart gestaltet sein, dass der Schieber in einer Ausgangslage vor der Umbugbildung derart auf dem Außenbereich des ersten Werkzeugs liegt, dass dessen Spitze zum Inneren des ersten Werkzeugteils gerichtet ist, dass bei Betätigung der Bewegungsmechanik der Schieber entlang der Oberseite des ersten Werkzeugteils bewegt wird, so dass bei dieser Bewegung der Randbereich von der schräg verlaufenden Kontur aufgenommen und von dem ersten Werkzeugteil abgehoben wird, und dass der Schieber bei Betätigung der Bewegungsmechanik derart weiter bewegt wird, dass der Randbereich auf die Rückseite der Trägerschicht umgelegt wird. auf der die ein Umlegen eines überstehenden Umbugbereichs der Dekorschicht über den Rand der Trägerschicht erfolgen kann.

Bei diesen Ausführungsformen kann der Schieber auf seiner Rückseite, die entgegen gesetzt zu der die Spitze aufweisenden Vorderseite desselben gelegen ist, einen Konturbereich aufweisen, der mit einer sich senkrecht zu dieser erstreckenden Abweichung von maximal 15% bezogen auf die Länge der Werkzeugunterseite dieselbe Querschnittsform hat wie die Konturoberfläche des ersten Werkzeugsteils an einer Stelle, an der bei einem für die Umbugbildung bestimmten Positionieren der Dekorschicht und der Trägerschicht im ersten Werkzeugteil der Randbereich gelegen ist.

Der Schieber kann von der Spitze ausgehend hinter der keilförmigen Kontur eine konkave Kontur aufweisen, um eine Bewegung des Schiebers zum Randbereich hin diesen aufzunehmen und diesen mit einer Krümmung zu versehen, bei der das Umklappen des Randbereichs um den Rand der Trägerschicht unterstützt wird.

Die Bewegungsmechanik zur Bewegung des Schiebers kann derart gestaltet sein, dass die Bewegungsmechanik den Schieber nach dem Umlegen des Randbereichs auf die Rückseite der Trägerschicht durch dessen Betätigung derart weiter bewegt, dass dessen Rückseite auf den auf der Rückseite der Trägerschicht liegende Randbereich der Dekorschicht auf die Trägerschicht gepresst wird.

Durch das erfindungsgemäße Verfahren der Bildung eines Umbugs oder dem Verfahren zur Kaschierung eines Kunststoff-Bauteils oder -Habzeugs mit einer Dekorschicht mit der Umbugbildung wird allgemein ein Innenausstattungsteil und insbesondere ein Innenverkleidungsteil eines Fahrzeugs hergestellt, wie z.B. eine Instrumententafel, ein Tür-Innenverkleidungsteil. Letzteres kann z.B. die Kartentasche der Seitentür eines Fahrzeugs, ein Bauteil wie der Deckel einer Mittelkonsole oder ein Teilstück solcher Innenverkleidungsteile sein. Dabei kann das erfindungsgemäße Innenausstattungsteil auch eine Sitzrückwand, ein Aufnahmebehälter oder ein Ablagefach in der Seitentür, eine Deckenverkleidungsplatte oder ein Dachhimmel, eine Türverkleidungsplatte, ein Deckel für ain Ablagefach, eine Verkleidungsplatte für das hintere Ablagefach oder ein Teil dieser Innenverkleidungsteile sein.

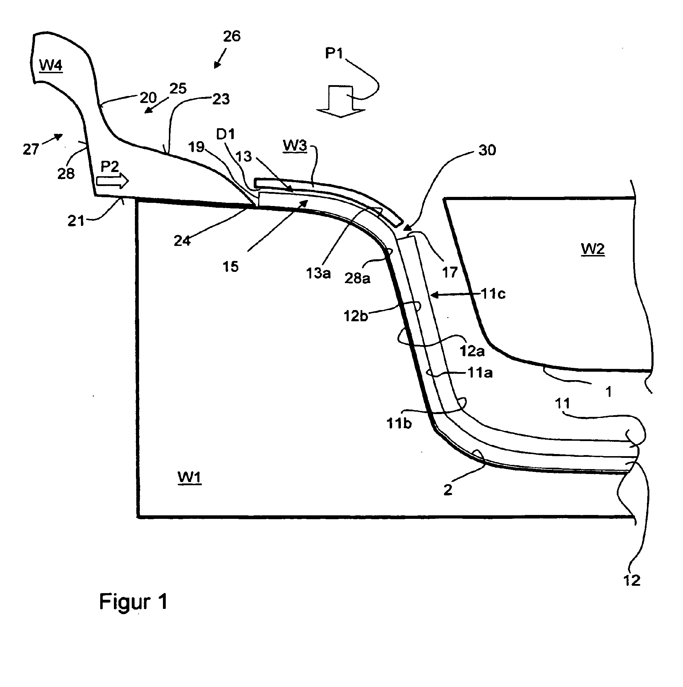

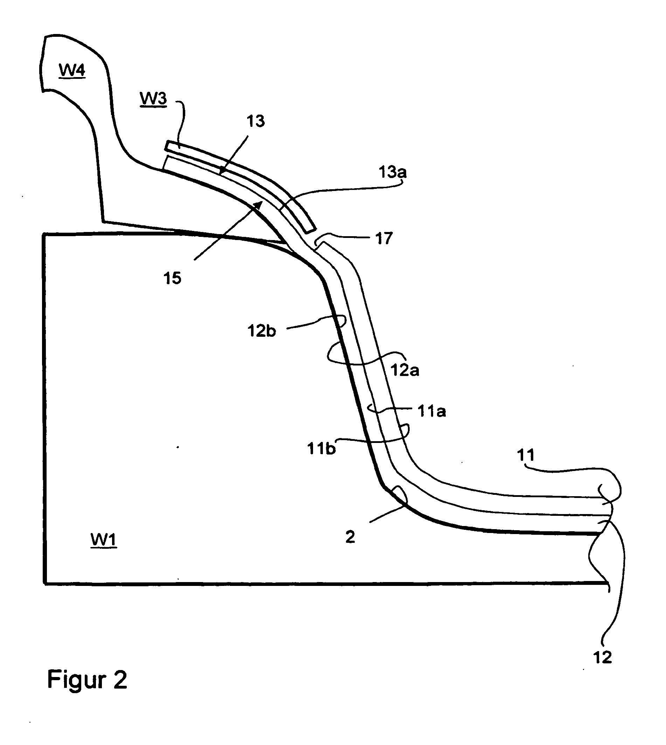

Im Folgenden werden Ausführungsbeispiele der Erfindung an Hand der beiliegenden Figuren 1 und 2 beschrieben, die zeigen:
- Figur 1 eine schematische Querschnittsdarstellung eines ersten Verfahrensschrittes eines Ausführungsbeispiels des erfindungsgemäßen Verfahrens und der erfindungsgemäßen Herstellungsvorrichtung in einem Ausgangszustand, bei dem eine Deck- oder Dekorschicht und eine Trägerschicht zwischen zwei Werkzeugteile eines Werkzeugs eingelegt und ein beheitztes Heizwerkzeug in Form eines Heizbands in geringer Entfernung über einem entlang zumindest eines Abschnitts des Außenrands der Deck- oder Dekorschicht verlaufenden Randstück derselben zur Erhitzung desselben positioniert ist, wobei die Deck- oder Dekorschicht auf einer Oberseite des Umbugschiebers aufliegt, wobei in dem Ausgangszustand das Randstück auf dem Werkzeugteil aufliegt;
- Figur 2 eine schematische Querschnittsdarstellung eines gegenüber der Figur 1 alternativen Ausführungsbeispiels des Verfahrens bzw. der Herstellungsvorrichtung nach der Erfindung, bei dem in einem Ausgangszustand das Randstück auf der Oberseite des Umbugschiebers aufliegt;

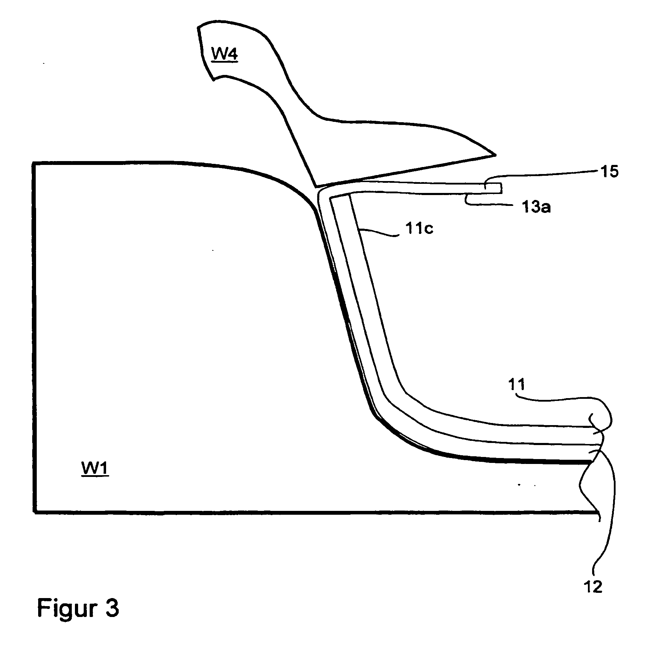

- Figur 3 eine schematische Querschnittsdarstellung des Ausführungsbeispiels des Verfahrens bzw. der Herstellungsvorrichtung nach der Figur 1 oder 2 in einem Zustand, in dem eine entgegen gesetzt zu der Oberseite gelegene Unterseite des Umbugschiebers einen Abschnitt der Deck- oder Dekorschicht auf den Außenrand der Trägerschicht aufdrückt, wobei das Randstück der Deck- oder Dekorschicht in Richtung von dessen Umbugstellung geschwenkt ist;

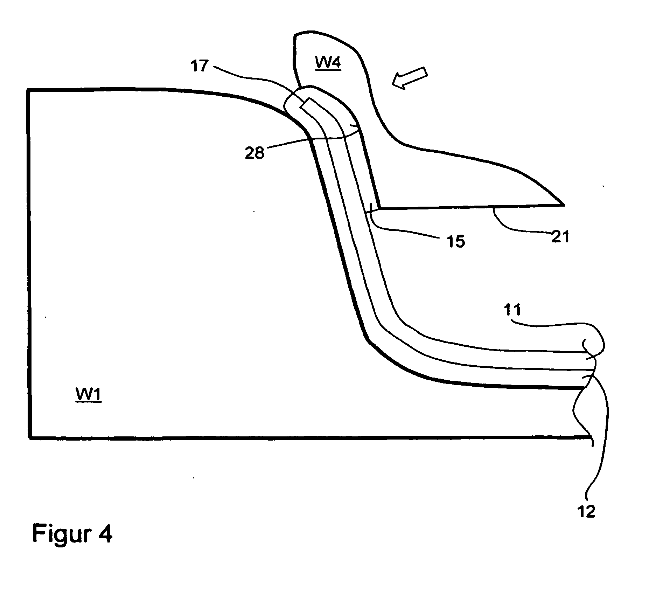

- Figur 4 eine schematische Querschnittsdarstellung des Ausführungsbeispiels des Verfahrens bzw. der Herstellungsvorrichtung nach der Figur 1 oder 2 in dem in der Figur 3 gezeigten nachfolgenden Zustand, in dem ein Anpressen des Umbugschiebers an die Sichtseite des umgebugten Randstücks des Umbugbereichs gegen die Trägerschicht zur Verklebung der Deck- oder Dekorschicht mit der Trägerschicht im umgebugten Bereich erfolgt.

Das erfindungsgemäße Verfahren zur Bildung eines Umbugs und/oder zur Kaschierung eines mehrlagigen Kunststoffbauteils verwendet insbesondere eine Trägerschicht 11 in Form einer Kunststoff-Fasermatte aufweisend eine Anlageseite und eine entgegen gesetzt zu dieser gelegenen Rückseite und einer Deck- oder Dekorschicht 12, im folgenden teilweise kurz Dekorschicht genannt, in Form einer Kunststoff-Folie aufweisend eine Sichtseite und einer entgegen gesetzt zu dieser gelegene Rückseite, die übereinander als Anordnung in einem Werkzeug W liegen.

Das Werkzeug W kann insbesondere als Pressverformwerkzeug mit zwei Werkzeugteilen W1, W2 ausgeführt sein, die jeweils Verformungskonturen 1 bzw. 2 aufweisen. Dabei können in einem Ausgangszustand die Deck- oder Dekorschicht 12 und zumindest eine Trägerschicht 11 durch Pressverformung miteinander verbunden worden sein. Bei diesem Verfahren erfolgt zunächst eine Verformung der Deck- oder Dekorschicht 12 und zumindest einer Trägerschicht 11 sowie die Verbindung der beiden Schichten 11, 12 miteinander durch das Zusammenfahren eines ersten, der Trägerschicht zugewandten Werkzeugteils mit einer dreidimensionalen Verformungskontur und eines zweiten, der zweiten Dekorschicht zugewandten Werkzeugteils mit einer dreidimensionalen Verformungskontur, so dass die ein- oder mehrschichtige Trägerschicht zur Anlage an den konturgebenden Bereich des ersten Werkzeugteils und die ein- oder mehrschichtige Dekorschicht zur Anlage an den konturgebenden Bereich des zweiten Werkzeugteils bestimmt ist. Die Werkzeugteile können dieselben Werkzeugteile W1, W2 sein, die in der Figur 1 dargestellt und für den Verfahrensschritt zur Bildung des Umbugs verwendet werden. Alternativ kann die Verbindung von Dekorschicht 12 und Trägerschicht 11 auch in einem anderen Werkzeug erfolgen. Generell können beide Schichten mehrschichtig sein, wobei auch mehrere Schichten der Dekorschicht oder der Trägerschicht mit dem Verfahren nach der Erfindung verformt und miteinander verbunden werden können. Generell sind die Dekorschicht und die Trägerschicht Schichten, die sich an ihren einander zugewandten Flächen unter Druck miteinander verbinden, z.B. zumindest bereichsweise verschmelzen oder verkrallen lassen.

Als Dekorschicht kann dabei ein textiles Gewebe, ein Schaum-Kunstleder, eine Kunststoff-Folie oder ein Leder verwendet werden. Bei der Verwendung eines textilen Gewebes als Dekorschicht kann für das Ausgangsmaterial eine Schicht aus textilen Materialien oder Folien oder eine Kombination aus beiden oder eine Kombination der genannten Alternativen verwendet werden. Die Dekorschicht weist in einem Ausführungsbeispiel insbesondere auch Schaum-Bestandteile, u.a. um die Haptik-Eigenschaften des Endprodukts auf der entsprechenden Seite des Bauteils zu optimieren. Darüber hinaus kann die Dekorschicht ein Verbund aus textilen Materialien, einem Schaum und einem Vlies-Material sein. Als Schaum kann ein PP-Schaum oder PE-Schaum oder ein auf PU aufbauender Schaum verwendet werden. In einem weiteren Ausführungsbeispiel kann die Dekorschicht 12 aus einer Schaumschicht und einer darüber liegenden Deckschicht mit der außen freiliegenden Sichtseite der Dekorschicht gebildet sein. Alternativ kann als Dekorschicht auch ein einschichtiges Material und insbesondere eine sogenannte Kompaktfolie verwendet werden.

Als Trägerschicht ist insbesondere ein Kunststoff und speziell eine Polypropylen (PP)-gebundene Fasermatte oder ein ABS-Kunststoffmaterial (Acrylnitril-Butadien-StyrolCopolymerisat-Kunststoff) in Form einer Matte vorgesehen. Diese kann insbesondere durch Wärmezufuhr plastifizierbar sein. Die Trägerschicht ist vorzugsweise aus einem Fasermaterial, vorzugsweise aus Naturfasern oder Glasfasern sowie aus Kunststoff-Fasern und insbesondere Polypropylen (PP)-Fasem gebildet. Die Naturfasern können aus Flachs oder Kenaf, Sisal, Leinen oder Baumwolle gebildet sein. In diesem Fall werden diese Fasern in einem vorbereitenden oder einem dem Verfahren vorangehenden Schritt zu einer Matte geformt. Anschließend werden unter Anwendung von Druck und Temperatur unter Aufschmelzung des Kunststoff-Anteiles ein miteinander verbundenes plastisches Matten-Material zur Verwendung als eine erfindungsgemäße Trägerschicht gebildet.

Bei der Herstellung des Bauteils mit einer Trägerschicht und einer Dekorschicht müssen die einander zugewandten Seiten der Dekorschicht und der Trägerschicht miteinander durch von dem Werkzeug ausgeübten Druck und gegebenenfalls unter Anwendung von Wärme miteinander verbindbar sein. Dazu kann zumindest die der Trägerschicht zugewandte Oberfläche der Dekorschicht aus einem Gewebe gebildet sein oder z.B. aus einem Vlies, einem Filz, einem Flachgewebe, einem Rundstrick gebildet sein. Eine Verbindung von Dekorschicht mit der Trägerschicht kann auch durch Verschmelzen der einander zugewandten Oberflächen unter Anwendung von Druck durch das Werkzeug und gegebenenfalls unter Anwendung von Wärme erfolgen. Ein Verschmelzen wird dadurch erreicht, dass die Dekorschicht an ihrer der Trägerschicht zugewandten Seite Schaum-Bestandteile enthält, die zur gleichen Material-Familie gehören wie die zur Verschmelzung vorgesehene Trägerschicht. Zur Erwärmung der Trägerschicht und der Dekorschicht sind die Werkzeugteile mit einer konturangepassten Heizung versehen.

Demgemäß hat die Dekorschicht 12 eine vordere Seite oder Sichtseite oder erste Seite 12a und eine zweite Seite oder Rückseite 12b, an der sich Schaum-Bestandteile befinden. Weiterhin kann die der Trägerschicht 11 zugewandte Trägerschicht der Dekorschicht die Eigenschaft aufweisen, sich mit der Trägerschicht unter Druck mechanisch zu verbinden, z.B. durch mechanische Verkrallung von an der genannten Seite der Dekorschicht angebrachten Fäden oder Haaren mit der gegebenenfalls angeschmolzenen Oberfläche der Trägerschicht.

Außer der Deck- oder Dekorschicht 12 und der Trägerschicht 11 können bei dem erfindungsgemäßen Verfahren zusätzlich zumindest eine Zwischen-Schicht und/oder eine Verstärkungs-Schicht, wie z.B. eine Schicht aus Glasfaser-Gewebe, verwendet werden, die zwischen der Material- und der Dekorschicht oder unterhalb der Trägerschicht gelegen sein kann, also auf der Seite der Trägerschicht gelegen sein kann, die der der Dekorschicht zugewandten Seite entgegengesetzt gelegen ist.

Die Werkzeugteile W1, W2 werden von einem Druck-Geber zueinander bewegt, um die Verformung der Trägerschicht bzw. der Dekorschicht sowie die Verbindung der beiden Schichten miteinander durch das Zusammenfahren des ersten und des zweiten Werkzeugteils zu bewirken. Das erste Werkzeugteil W1 kann an einem ersten Werkzeughalter oder einer Montageplatte und zweite Werkzeugteil W2 kann an einem zweiten Werkzeughalter oder einer Montageplatte montiert sein.

Das erfindungsgemäße Pressverform-Werkzeug kann weiterhin eine Spannrahmen-Vorrichtung (nicht gezeigt) mit zumindest zwei, zueinander und gegenüber den Werkzeugteilen beweglichen Spannrahmen oder Spannrahmen-Elementen aufweisen, die vorzugsweise gegenüber den Werkzeugteilen verschiebbar sind, um die Trägerschicht und/oder die Dekorschicht während des Verformungsvorganges außerhalb des Konturbereichs des Werkzeugs in vorbestimmter Weise zu halten. Die Beweglichkeit der Spannrahmen bezieht sich zumindest auf die Beweglichkeit in Richtung der Öffnungs- und Schließ-Bewegung der Werkzeugteile. Die Spannrahmen-Elemente sind jeweils außerhalb der konturgebenden Bereiche der Werkzeugteile angeordnet. Diese können einteilig gebildet sein und als die Werkzeugteile umlaufende Gebilde gestaltet sein. Die Spannrahmen-Elemente können auch entlang des Umfangs oder entlang eines Bereichs des Umfangs der Werkzeugteile mehrteilig gebildet sein. Auch kann ein Spannrahmen-Element aus zwei Teilen gebildet sein, die an Stellen außerhalb der Werkzeugteile 11, 12 angeordnet sind. Diese Stellen können insbesondere einander diametral gegenüber liegen. Auch können mehrere, z.B. drei oder vier Teile eines Spannrahmen-Elements außerhalb des Umfangs des jeweiligen Werkzeugteils oder der Werkzeugteile je nach Anwendungsfall regelmäßig oder unregelmäßig um diesen herum verteilt, angeordnet sein.

Die Spannrahmen-Elemente können unterschiedlich gebildet sein. Die Bauweise und Anordnung der Spannrahmen-Elemente richtet sich nach Art, Material und Gestalt des herzustellenden Bauteils bzw. nach Art, Material und Gestalt der Materialien. Die Spannrahmen-Elemente weisen jeweils einen Anlagebereich oder zwei Anlagebereiche auf, der bzw. die bei der Herstellung des Bauteils dazu vorgesehen ist bzw. sind, dass ein Überstand-Bereich der Trägerschicht und/oder der Dekorschicht an diesen bzw. an diese anlegbar ist.

Das erfindungsgemäße Verfahren zum Kaschieren von Formteilen mit räumlichen Oberflächenkonturen oder zum Kaschieren eines mehrlagigen Kunststoffbauteils mit anschließender Umbug-Bildung erfolgt zunächst dadurch, dass die Trägerschicht mittels eines Spannrahmens an die konturgebende Oberfläche einem ersten der Werkzeugteile angelegt wird. Alternativ wird das bereits verformte Material aus der miteinander verbundenen Deck- oder Dekorschicht 12 und Trägerschicht 11 in ein Werkzeug W eingelegt. Bei beiden Verfahrensweisen sind die Deck- oder Dekorschicht 12 und die Trägerschicht derart gelegen und gegebenenfalls durch entsprechenden Beschnitt der Deck- oder Dekorschicht 12 und/oder der Trägerschicht 11 gestaltet, dass sich ein entlang zumindest eines Abschnitts des Außenrands 19 der Deck- oder Dekorschicht 12 verlaufendes Randstück 15 oder verlaufender Randabschnitt 15 derselben über den entlang diesem verlaufenden Abschnitt des Außenrands 17 der Trägerschicht 11 unter Ausbildung eines freiliegenden Rückseitenbereichs 13 hinaus erstreckt. Die Dekorschicht weist somit einen oder mehrere Umbugbereiche oder Randstück 15 auf, d.h. Bereiche, die gegenüber der Trägerschicht überstehen, wenn die Dekorschicht in für den Press-Vorgang vorbestimmter Weise oder nach einem Pressverformungsvorgang auf der Trägerschicht liegt.

In dem Verfahrensschritt zur Verbindung von Trägerschicht 11 mit Dekorschicht 12 kann ein Beschneiden der Trägerschicht und/oder der Dekorschicht vorgesehen sein. Dies kann mit Hilfe eines oder mehrerer Spannrahmen erfolgen.

Bei dem erfindungsgemäßen Verfahren erfolgt anschließend die Bildung des Umbugs mit dem gegenüber der Trägerschicht überstehenden Randbereich 15 der Dekorschicht 12. Dieser Verfahrensschritt kann mit einem anderen Werkzeug W als das für den vorangehenden Verfahrensschritt verwendete Pressverform-Werkzeug erfolgen. Das Beschneiden der Trägerschicht und/oder der Dekorschicht kann alternativ oder zusätzlich in dem eigens für die Bildung des Umbugs vorgesehenen Werkzeug erfolgen.

Zur Umbug-Bildung liegt die Dekorschicht 12 mit ihrer Sichtseite 12a auf einem Werkzeugteil W1 des Werkzeugs W auf. Die Trägerschicht 11 liegt wiederum mit einer ersten Seite 11 a auf der Rückseite 13 der Dekorschicht 12 auf, so dass die Dekorschicht 12 und die Trägerschicht 11 als Anordnung in dem Werkzeug W liegen. Dabei erstreckt sich ein als Umbugbereich vorgesehener Randbereich 15 der Dekorschicht 12 mit einem freiliegenden Rückseitenbereich 13a über den naheliegenden entsprechenden Rand 17 der Trägerschicht 11 hinaus.

In diesem Zustand kann ein Beschneiden der Trägerschicht und/oder der Dekorschicht alternativ oder zusätzlich zu dem Beschneiden im Press-Verformungsschritt vorgesehen sein. Das Beschneiden kann mit einer Schneidvorrichtung erfolgen. Das Schneidmesser derselben kann insbesondere beheizt sein. Beim Schneiden können sich die Werkzeugteile W1 und W2 im zusammen gefahrenen Zustand befinden, in dem diese die Anordnung aus Dekorschicht und Trägerschicht halten.

Bei der Bildung des Umbugs erfolgt in dem Zustand, in dem die Dekorschicht 12 und die Trägerschicht 11 in dem Werkzeug W liegen, ein Beheizen eines Heizwerkzeugs und insbesondere eines bandförmigen Werkzeugteils oder Heizbandes W3 und ein Annähern oder auch zusätzlich Anlegen des beheizten Werkzeugteils W3 an den freiliegenden Rückseitenbereich 13a des Umbugbereichs 13 der Dekorschicht 12 (Pfeil P1). Das bandförmige Werkzeugteil W3 erstreckt sich dabei mit seiner Längsrichtung entlang des freiliegenden Rands des Randbereiches der Dekorschicht, jedoch oberhalb des freiliegenden Rückseitenbereichs 13a. Das bandförmige Werkzeugteil W3 ist derart erwärmt und speichert ausreichend Wärmemenge, dass bei dem erfindungsgemäßen Annähern oder auch Anlegen des bandförmigen Werkzeugteils W3 an den Rückseitenbereich 13a ein Aufschmelzen eines Teils der Dekorschicht 12 am und entlang des freiliegenden Rückseitenbereichs 13a erfolgt.

Das Heizband W3 hat eine Dicke von vorzugsweise 1 bis 10 mm. Duch die Gestaltung der Heizvorrichtung als Heizband ist es möglich, dass das Heizband in eine dreidimensional zu beschreibende Formgebung gebracht und der Gestalt des Rückseitenbereichs 13a angepasst werden kann.

Das Heizband kann insbesondere ein Widerstandheizband z.B. aus VA-Stahl oder Aluminium sein, das durch Anlegen von eletkrischem Strom erhitzt werden kann. Die Übertragung der in dem Heizwerkzeug bzw. Heizband W3 enthaltenen Wärme kann in einem Zustand erfolgen, in dem die dem Rückseitenbgereich 13a zugewandte Oberfläche des Heizwerkzeugs bzw. Heizbands W3 zu dem Rückseitenbereich 13a beabstandet ist. In diesem Fall beträgt der Abstand D1 vorzugsweise zwischen 1 mm und 20 mm. In einem weiteren Ausführugnsbeispiel kann das Heizwerkzeug bzw. Heizband W3 bei Übertragen der Wärme auf das Randstück 15 an diesem Anliegen.

Das Heizwerkzeug mit einer entsprechenden Heizfläche bzw. Heizband W3 hat bei den erfindungsgemäß verwendeten Materialien eine Temperatur zwischen 180 Grad Celsius und 300 Grad Celsius und vorzugsweise zwischen 220 Grad Celsius und 250 Grad Celsius. Auf diese Weise ist es möglich, dass die erfindungsgemäß vorgesehene Deck- oder Dekorschicht 12 durch einen nahen Abstand des Heizwerkzeugs oder Heizbandes W3 mit der Deck- oder Dekorschicht 12 oder ein Kontaktieren der jeweiligen Unterseite oder Heizfläche des Heizwerkzeugs oder Heizbandes W3 mit der Deck- oder Dekorschicht 12 jeweils über einen geeigneten vorgegebenen Zeitintervall in kontrollierter Weise erhitzt wird, so dass nur ein Dickenbereich entlang des Rückseitenbereichs 13a aufgeschmolzen werden kann und die Sichtseite der Deck- oder Dekorschicht 12 in ihrer Qualtität erhalten bleibt und nicht beeinträchtigt wird. Hierzu muss der entlang der Sichtseite der Deck- oder Dekorschicht 12 verlaufende Dickenbereich unterhalb einer Temperatur von maximal 120 Grad Celsius bleiben, was in besonderer Weise durch die erfindungsgemäße Lösung möglich ist. Der Dickenbereich entlang des Rückseitenbereichs 13a wird erfindungsgemäß dabei auf eine Temperatur zwischen 170 und 210 Grad Celsius und vorzugsweise zwischen 180 und 190 Grad Celsius aufgeheizt.

Insbesondere in dem Fall, dass die Deck- oder Dekorschicht 12 an seiner Rückseite eine Schaumschicht z.B. aus haptischen oder optischen Gründen aufweist, kann vorgesehen sein, dass das Heizwerkzeug oder Heizband W3 zusätzlich auf den Rückseitenbereich 13a derart aufgedrückt wird, dass an dem Rückseitenbereich 13a die Dicke des Querschnitts des Randstücks der Deck- oder Dekorschicht 12 um mindestens 10% reduziert wird. Dadurch kann die Ausbildung einer Wulst der Deck- oder Dekorschicht 12 an der Randseite 17 vermieden und ein sehr genaues Ausbilden des Umbugs in diesem Bereich mit einer Genauigkeit von 0,1 mm und auch mit im Querschitt (s. Figuren) gesehen Radien von 0,8 bis 1 mm erreicht werden. Dadurch kann ein sehr genaues Einbauen des herzustellenden Bauteils in ein Karosserieteil mit hoher Genauigkeit erreicht werden. Das Eindrücken in die Schaumschicht der Deck- oder Dekorschicht 12 kann insbesondere derart erfolgen, dass diese bei eienr Ausgangsdicke zwischen 1,0 und 3,0 mm auf eine Dicke zwischen 0,1 und 0,3 mm zusammengedrückt wird.

Bei dem Erwärmen des Randstücks 15 mit dem Heizwerkzeug oder Heizband W3 kann zusätzlich ein Erwärmen des am Rand 17 der Trägerschicht verlaufendes Randstück sowie ein vor dem Rand 17 gelegener Bereich 30 der Rückseite der Deck- oder Dekorschicht 12 mittels eines zweiten Wekrzeugteil W2 erfolgen. Durch die Erwärmung des Bereichs 30 wird die Umbugbildung speziell an der Stelle, an der kleine Radien entstehen, untersützt. Dies ist auch dann vorteilhaft, wenn das Heizwerkzeug oder Heizband W3 nicht nahe genug am Rand 17 der Deck- oder Dekorschicht 12 diese auf die genannten Temperaturen erwärmen kann. Das zweite Werkzeugteil W2 kann ein Werkzeugteil eines Pressverformvorrcihtung oder eine Heizvorrichtung sein. Dabei ist das zweite Werkzeugteil W2 an einer entsprechenden Seite erwärmt und liegt mit seiner Heizseite nahe an den Bereichen 11c und 30 oder kontaktiert den Bereich 11c. Die Temperatur der Heizseite beträgt bei diesem Ausführungsbeispielen zwischen 100 und 160 Grad Celsius und vorzugsweise zwischen 120 und 140 Grad Celsius

Nach dem Erwärmen des Umbugbereichs und Ausfschmelzen zumindest des an der Rückseite 13 anliegenden Querschnittsbereichs der Dekorschicht 12 erfolgt ein Umlegen des Umbugbereichs 13 um den naheliegenden Rand 17 der Trägerschicht 11 und ein Auflegen des Umbugbereichs 13 mit seinem Rückseitenbereich 13a auf die zur ersten Seite 11 a entgegengesetzt gelegenen zweiten Seite 11 b der Trägerschicht 11. Anschließend kann der Umbugbereich 13 auf die Trägerschicht 11 aufgedrückt oder aufgepresst werden. Dies kann insbesondere mit einem dem ersten Werkzeugteil W1 gegenüber liegenden zweiten Werkzeugteil W2 erfolgen.

Vor dem Umlegen des Umbugbereichs muss gegebenenfalls das Heizwerkzeug oder das bandförmige Werkzeugteil W3 in eine Position gefahren werden, in der dieses das Umlegen nicht behindert.

Alternativ oder zusätzlich kann das Beheizen des Umbugbereichs auch durch WärmeBestrahlung erfolgen.

Anschließend erfolgt die Entnahme der Anordnung aus Trägerschicht 11 und Dekorschicht 12 mit dem auf die zweite Seite 11 b der Trägerschicht 11 aufgelegten Umbugbereich der Dekorschicht 12 aus dem Werkzeug W.

Wenn das Andrücken oder Zusammenpressen des Umbugbereichs auf die Rückseite 18 der Trägerschicht mit dem zweiten Werkzeugteil W2 erfolgt, muss vor der Entnahme der Anordnung aus Trägerschicht 11 und Dekorschicht 12 ein Auseinanderfahren der Werkzeugteile W1, W2 erfolgen.

Das Umlegen des Umbugbereichs 13 um den naheliegenden Rand 17 der Trägerschicht 11 kann mittels eines Schiebers W4 erfolgen. Der Schieber W4 zum Umlegen des Umbugbereichs 13 um den naheliegenden Rand 17 der Trägerschicht 12 wird dabei, von dem Inneren des Werkzeugs W her gesehen, von außen (Pfeil P2) entlang der der Dekorschicht 12 zugewandten Werkzeugkontur 1 des ersten Werkzeugsteils W1 auf den Umbugbereich 15 der Dekorschicht 11 zu bewegt wird.

Der Schieber kann insbesondere durch eine geführt werden. Weiterhin kann eine Betätigungsvorrichtung vorgesehen sein, mit der die Bewegungsmechanik betätigt, d.h. in Gang gesetzt und der Schieber von einer Ausgangsstellung in die Arbeitsstellung und wieder zurück bewegt werden kann.

Dabei sind die Werkzeugkontur 1 des ersten Werkzeugs W1 und der Schieber W4 derart gestaltet, dass beim Bewegen des Schiebers W4 zum Umlegen des Umbugbereichs 13 eine Krümmung desselben in Richtung zur Trägerschicht 12 bewirkt werden kann und dass der Umbugbereich 15 durch seine Schwerkraft um den naheliegenden Rand 17 der Trägerschicht 11 klappt. Hierzu kann die Arbeitsfläche des Schiebers W4 insbesondere eine konkav gekrümmte Oberfläche 20 mit einer geeigneten Gestaltung aufweisen, bei der das Umklappen des Umbugbereichs effizient unterstützt wird und möglichst kein weiteres Werkzeug oder gar ein manuelles Unterstützen dieses Schritts notwendig ist.

Es kann vorgesehen sein, dass vor dem Umlegen des erwärmten Umbugbereichs 13 die Anordnung aus der Trägerschicht 11 und der Dekorschicht 12 zwischen den zwei Werkzeugteilen 1, 2 eines Werkzeugs W gelegen sind und dass ein Fixieren der Anordnung aus der Trägerschicht 11 und der Dekorschicht 12 durch Zusammenpressen der beiden Werkzeugteile W1, W2 erfolgt. Ebenso kann vorgesehen sein, dass während des Aufschmelzens des Umbugbereichs 13 an der freiliegenden Oberfläche der Schaumschicht 17 der Dekorschicht 12 mit dem beheizten Werkzeugteil 10 sich die Werkzeugteile 1, 2 in einem die Anordnung aus der Trägerschicht 11 und der Dekorschicht 12 zusammen pressenden Zustand befinden.

Erfindungsgemäß ist auch eine Vorrichtung zum Kaschieren eines Formteils aus Kunststoff mit räumlichen Oberflächenkonturen insbesondere für Innenverkleidungen von Kraftfahrzeugen unter Verwendung einer Trägerschicht 11 und einer Dekorschicht 12 vorgesehen. Die Vorrichtung weist auf: zwei Werkzeugteile W1, W2 zur Aufnahme einer Anordnung aus zwei Schichten mit einem Schieber W4, und eine Bewegungsmechanik, mit der der Schieber W4 durch Betätigung einer Betätigungsvorrichtung entlang der Werkzeugkontur 1 des ersten Werkzeugs bewegbar ist. Die Bewegungsmechanik und die Betätigungsmechanik sind derart beschaffen, dass mit diesen die Geschwindigkeit des Schiebers bei der Bewegung entlang der Werkzeugkontur 1 des ersten Werkzeugs W1 eingestellt bzw. umgesetzt werden kann.

Durch die Erwärmung der Umbugbereiche und ein teilweises Aufschmelzen desselben kann die Verbindung zwischen der Trägerschicht 11 und der Rückseite 13 des Umbugbereichs 15 kleberlos erfolgen. Es kann jedoch zusätzlich vorgesehen sein, dass auf den entsprechenden Bereich der Rückseite 18 der Trägerschicht ein Klebstoff aufgetragen wird.

Durch ein teilweises Aufschmelzen des Umbugbereichs ist weiterhin dieser Bereich, insbesondere in dem Krümmungsbereich am Rand 17 der Trägerschicht derart verformbar und/oder plastifiziert, dass die Dekorschicht 12 am Rand 17 nicht ausbeult und dicht am Rand 17 der Trägerschicht 11 aufliegt und auch eine Verbindung zwischen Dekorschicht 12 mit dem Rand 17 der Trägerschicht 11 erfolgt.

Die Vorrichtung zum Kaschieren eines Formteils aus Kunststoff mit räumlichen Oberflächenkonturen weist somit auf: zwei Werkzeugteile W1, W2 zur Aufnahme einer Anordnung aus zwei Schichten mit einem Schieber W4, und eine Bewegungsmechanik, mit der der Schieber W4 durch Betätigung einer Betätigungsvorrichtung entlang der Werkzeugkontur 1 des ersten Werkzeugs bewegbar ist. Der Schieber W4 hat eine Unterseite 21 und kann insbesondere eine von dieser ausgehende schräg verlaufende Kontur 23 mit zwischen diesen gelegene Spitze 24 aufweisen, so dass die Unterseite 21 und die schräg verlaufende Kontur 23 einen keilförmigen Schieber-Querschnitt bilden.

Für die Durchführung des erfindungsgemäßen Verfahren kann die Bewegungsmechanik zur Bewegung des Schiebers (W4) derart gestaltet sein, dass der Schieber W4 in einer Ausgangslage vor der Umbugbildung derart auf dem Außenbereich 40 des ersten Werkzeugs W1 liegt, dass dessen Spitze 24 zum Inneren des ersten Werkzeugteils W1 gerichtet ist, dass bei Betätigung der Bewegungsmechanik der Schieber W4 entlang der Oberseite des ersten Werkzeugteils W1 bewegt wird, so dass bei dieser Bewegung der Randbereich 15 von der schräg verlaufenden Kontur 23 aufgenommen und von dem ersten Werkzeugteil W1 abgehoben wird, und dass der Schieber W4 bei Betätigung der Bewegungsmechanik derart weiter bewegt wird, dass der Randbereich 15 auf die Rückseite 18 der Trägerschicht 11 umgelegt wird, so dass ein Umlegen eines überstehenden Umbugbereichs 13 der Dekorschicht 12 über den Rand 17 der Trägerschicht 12 erfolgen kann.

Der Schieber W4 kann auf seiner Rückseite 27, die entgegen gesetzt zu der die Spitze 24 aufweisenden Vorderseite 26 desselben gelegen ist, einen Konturbereich 28 aufweisen, der mit einer sich senkrecht zu dieser erstreckenden Abweichung von maximal 15% bezogen auf die Länge der Werkzeugunterseite 21 dieselbe Querschnittsform hat wie die Konturoberfläche 28a des ersten Werkzeugsteils W1 an einer Stelle, an der bei einem für die Umbugbildung bestimmten Positionieren der Dekorschicht 12 und der Trägerschicht 11 im ersten Werkzeugteil W1 der Randbereich 15 gelegen ist. Die Länge der Werkzeugunterseite 21 ist insbesondere 75% der Fläche, die auf der Oberfläche des Werkzeugteils W1 aufliegt, wenn der Schieber an dieser entlang bewegt wird.

Der Schieber W4 kann insbesondere derart gestattet sein, dass von der Spitze 24 ausgehend hinter der keilförmigen Kontur 23 eine konkave Kontur 25 verläuft, um einer Bewegung des Schiebers W4 zum Randbereich 15 hin diesen aufzunehmen und diesen mit einer Krümmung zu versehen, die das Umklappen des Randbereichs 15 um den Rand 17 der Trägerschicht 11 unterstützt.

Weiterhin kann die Bewegungsmechanik zur Bewegung des Schiebers W4 derart gestaltet sein, dass nach dem Umlegen des Randbereichs 15 auf die Rückseite 18 der Trägerschicht 11 durch den Schieber W4 die Bewegungsmechanik den Schieber W4 durch deren Betätigung derart weiter bewegt, dass dessen Rückseite 28 den auf der Rückseite 18 der Trägerschicht 11 liegenden Randbereich 15 der Dekorschicht 12 auf die Trägerschicht 12 presst.

## Patentansprüche

1. Verfahren zum Herstellen eines Formteils insbesondere für Innenverkleidungen von Kraftfahrzeugen unter Verwendung einer Trägerschicht (11) aus Kunststoff, aufweisend eine Anlageseite und eine entgegen gesetzt zu dieser gelegenen Rückseite, und einer zumindest an einem Randabschnitt der Trägerschicht (11) umgebugten Deck- oder Dekorschicht (12) in Form einer Kunststoff-Folie, aufweisend eine eine Sichtseite bildende Deckfolie und eine eine Rückseite bildende Schaumschicht, die übereinander als Anordnung in einem Werkzeug (W) liegen,
▪ Einlegen der Trägerschicht (11) mit einem inneren Bereich der Deck- oder Dekorschicht (12) und der Trägerschicht (11) zwischen zwei Werkzeugteile eines Werkzeugs, wobei die Deck- oder Dekorschicht (12) mit ihrer Sichtseite (12a) auf einem ersten Werkzeugteil (W1) und die Trägerschicht (11) mit der Rückseite an dem zweiten Werkzeugteil anliegt, so dass die Verbindungsseiten der Deck- oder Dekorschicht (12) und der Trägerschicht (11) aneinander anliegen, wobei sich ein entlang zumindest eines Abschnitts des Außenrands der Deck- oder Dekorschicht (12) verlaufendes Randstück derselben über den entlang diesem verlaufenden Abschnitt des Außenrands (17) der Trägerschicht (11) unter Ausbildung eines freiliegenden Rückseitenbereichs (13a) mit einer freiliegenden Schaumschicht hinaus erstreckt,
▪ Beheizen eines Heizwerkzeugs (W3) und Annähern des beheizten Heizwerkzeugs (W3) an den freiliegenden Rückseitenbereich (13a) des für die Umbugbildung vorgesehenen Randstücks (13) der mit der Trägerschicht (11) verbundenen Deck- oder Dekorschicht (12) über einen vorbestimmten Zeitabschnitt derart, dass der Oberflächenbereich am freiliegenden Rückseitenbereich (13a) aufgeschmolzen wird,
▪ Bewegen eines Umbugschiebers (W4) von einer Stellung, in der eine erste Seite (23) des Umbugschiebers an der Sichtseite des sich über den Außenrandabschnitt der Trägerschicht (11) hinaus erstreckenden Randstücks der Deck- oder Dekorschicht (12) anliegt, in eine Stellung, in der eine zweite Seite (21) des Umbugschiebers einen Abschnitt der Deck- oder Dekorschicht (12) auf den Außenrand (17) der Trägerschicht (11) aufdrückt, wobei das Randstück (13) in Richtung von dessen Umbugstellung geschwenkt wird,
▪ Bewegen des Umbugschiebers (W4) in eine Stellung, in der ein Konturbereich (28) des Umbugschiebers an der Sichtseite (12a) der Deck- oder Dekorschicht (12) anliegt, wobei der Umbugschieber (W4) derart in diese Stellung bewegt wird, dass das sich über den Außenrandabschnitt der Trägerschicht (11) hinaus erstreckende Randstück (13) der Deck- oder Dekorschicht (12) mit seiner aufgeschmolzenen Rückseite an der Rückseite der Trägerschicht (11) anliegt; und
▪ Anpressen des Umbugschiebers mit einem Konturbereich (28) an die Sichtseite des umgebugten Randstücks (15) gegen die Trägerschicht (11) zur Verklebung der Deck- oder Dekorschicht (12) mit der Trägerschicht (11) im umgebugten Bereich.

2. Verfahren zum Herstellen eines Formteils nach dem Anspruch 1, **dadurch gekennzeichnet, dass** das Werkzeug, in das die Deck- oder Dekorschicht (12) und die Trägerschicht (11) eingelegt wird, ein Pressverform-Werkzeug ist und dass die Deck- oder Dekorschicht (12) und die Trägerschicht (11) als mattenförmige Schichten derart in das Pressverform-Werkzeug eingelegt werden, dass das sich über den Außenrandabschnitt der Trägerschicht (11) hinaus erstreckende Randstück der Deck- oder Dekorschicht (12) mit dem freiliegenden Rückseitenbereich (13a) außerhalb der Presskonturflächen der Werkzeugteile liegt, und dass vor dem Bewegen des Umbugschiebers (W4) zwischen zwei Werkzeugteile eines Werkzeugs die Deck- oder Dekorschicht (12) und die Trägerschicht (11) durch die zwei Werkzeugteile des Pressverform-Werkzeugs unter Anwendung von Druck und Temperatur miteinander verbunden werden.

3. Verfahren zum Herstellen eines Formteils nach einem der voranstehenden Ansprüche, **dadurch gekennzeichnet, dass** die Deck- oder Dekorschicht (12) und die Trägerschicht (11) als gehärtet und miteinander durch ein Pressverformverfahren verbundene Schichten in die Werkzeugteile eingelegt werden

4. Verfahren zum Herstellen eines Formteils nach einem der voranstehenden Ansprüche, **dadurch gekennzeichnet, dass** als Ausgangsmaterial für die Trägerschicht (11) eine Polypropylen (PP)-gebundene Fasermatte verwendet wird.

5. Verfahren zum Herstellen eines Formteils nach einem der voranstehenden Ansprüche, **dadurch gekennzeichnet, dass** die Deck- oder Dekorschicht (12) aus einer Folienschicht gebildet ist.

6. Verfahren zum Herstellen eines Formteils nach einem der voranstehenden Ansprüche, **dadurch gekennzeichnet, dass** die Deck- oder Dekorschicht (12) aus TPO (Thermoplast-Polyolefin) oder aus PVC (Polyvinylchlorid) gebildet ist, und/oder dass die Deck- oder Dekorschicht (12) aus einer Deckfolie und einer insbesondere aus Polypropylen (PP) gebildeten Schaumschicht gebildet ist, die die Rückseite bildet.

7. Verfahren zum Herstellen eines Formteils nach einem der voranstehenden Ansprüche, **dadurch gekennzeichnet, dass** die Deckfolie der Deck- oder Dekorschicht (12) eine Dicke von 0,3 mm bis 0,7 mm hat und die Schaumschicht der Deck- oder Dekorschicht (12) eine Dicke von 1,0 mm bis 3,0 mm hat.

8. Verfahren zum Herstellen eines Formteils nach einem der voranstehenden Ansprüche, **dadurch gekennzeichnet, dass** das Heizwerkzeug (W3) ein Heizband ist und dass das Beheizen eines Heizwerkzeugs (W3) durch Widerstandsheizen erfolgt.

9. Verfahren zum Herstellen eines Formteils nach einem der voranstehenden Ansprüche, **dadurch gekennzeichnet, dass** bei dem Annähern des beheizten Heizwerkzeugs (W3) an den freiliegenden Rückseitenbereich (13a) des für die Umbugbildung vorgesehenen Randstücks (13) der Deck- oder Dekorschicht (12) die Oberseite des Umbugschiebers (W4) an der Sichtseite des sich über den Außenrandabschnitt der Trägerschicht (11) hinaus erstreckenden Randstücks (13) der Deck- oder Dekorschicht (12) anliegt.

10. Verfahren zum Herstellen eines Formteils nach einem der voranstehenden Ansprüche, **dadurch gekennzeichnet, dass** bei dem Annähern des beheizten Heizwerkzeugs (W3) an den freiliegenden Rückseitenbereich (13a) des für die Umbugbildung vorgesehenen Randstücks (13) der Deck- oder Dekorschicht (12) das Heizwerkzeugs (W3) mit dem freiliegenden Rückseitenbereich (13a) kontaktiert wird.

11. Verfahren zum Herstellen eines Formteils nach einem der voranstehenden Ansprüche, **dadurch gekennzeichnet, dass** die Deckfolie der Deck- oder Dekorschicht (12) eine Dicke von 0,3 mm bis 0,7 mm hat und die Schaumschicht der Deck- oder Dekorschicht (12) eine Dicke von 1,0 mm bis 3,0 mm hat und dass das Heizwerkzeug (W3) auf den freiliegenden Rückseitenbereich (13a) derart aufgedrückt wird, dass die Schaumschicht eine Dicke von 0,1 bis 0,2 mm erhält.

12. Verfahren zum Herstellen eines Formteils nach einem der voranstehenden Ansprüche, **dadurch gekennzeichnet, dass** bei dem Aufschmelzen des Randstücks der Deck- oder Dekorschicht (12) das der Rückseite des Trägerschicht (11) zugewandte Werkzeugteil auf eine Temperatur zwischen 100 und 170 Grad Celsius erwärmt wird, wobei dabei der Abstand zwischen der Außenseite des Werkzeugteils (W2) und der Rückseite der Trägerschicht zwischen 1,0 und 10,0 mm beträgt.

13. Vorrichtung zum Herstellen eines Formteils aus Kunststoff mit räumlichen Oberflächenkonturen insbesondere für Innenverkleidungen von Kraftfahrzeugen unter Verwendung einer Trägerschicht (11) und einer Deck- oder Dekorschicht (12), die mit einem Randstück (15) zumindest an einem Randabschnitt der Trägerschicht (1) umgebugt ist, aufweisend:
▪ zwei Werkzeugteile (W1, W2) zur Aufnahme einer Anordnung der Trägerschicht (11) und der Deck- oder Dekorschicht (12),
▪ ein Heizwerkzeug (W3), das derart ausgeführt und bewegbar ist, dass dieses an einen freiliegenden Rückseitenbereich (13a) des für die Umbugbildung vorgesehenen und sich über den Außenrandabschnitt der Trägerschicht (11) hinaus erstreckenden Randstücks (15) der Deck- oder Dekorschicht (12) annäherbar ist, um den Rückseitenbereich (13a) anzuschmelzen,
▪ einen Schieber (W4),
▪ eine Bewegungsmechanik, mit der der Schieber (W4) eine tranlsatorische Bewegung überlagert von einer Drehbewegung derart ausführen kann, dass der Schieber (W4) mit einer ersten Seite (23) das Randstück (15) schwenken kann, anschließend mit einer zweiten Seite (21) einen Abschnitt der Deck- oder Dekorschicht (12) auf den Außenrand (17) der Trägerschicht (11) aufdrücken kann und das sich über den Außenrandabschnitt der Trägerschicht (11) hinaus erstreckende Randstück der Deck- oder Dekorschicht (12) mit seiner aufgeschmolzenen Rückseite an der Rückseite der Trägerschicht (11) anlegen und anpressen kann.

14. Vorrichtung zum Herstellen eines Formteils aus Kunststoff nach dem Anspruch 13, **dadurch gekennzeichnet, dass** mit der Bewegungsmechanik und der Betätigungsmechanik die Geschwindigkeit des Schiebers (W4) bei der Bewegung entlang der Werkzeugkontur (1) des ersten Werkzeugs (W1) eingestellt werden kann.

15. Vorrichtung zum Herstellen eines Formteils aus Kunststoff nach dem Anspruch 13 oder 14, **dadurch gekennzeichnet, dass** der Schieber (W4) eine Unterseite(21) und eine von dieser ausgehende schräg verlaufender Kontur (23) mit zwischen diesen gelegene Spitze (24) aufweist, so dass die Unterseite (21) und die schräg verlaufende Kontur (23) einen keilförmigen Schieber-Querschnitt bilden.

16. Vorrichtung zum Herstellen eines Formteils aus Kunststoff nach dem Anspruch 14 oder 15, **dadurch gekennzeichnet, dass** der Schieber (W4) auf seiner Rückseite (27), die entgegen gesetzt zu der die Spitze (24) aufweisenden Vorderseite (26) desselben gelegen ist, einen Konturbereich (28) aufweist, der mit einer sich senkrecht zu dieser erstreckenden Abweichung von maximal 15% bezogen auf die Länge der Werkzeugunterseite (21) dieselbe Querschnittsform hat wie die Konturoberfläche (28a) des ersten Werkzeugsteils (W1) an einer Stelle, an der bei einem für die Umbugbildung bestimmten Positionieren der Dekorschicht (12) und der Trägerschicht (11) im ersten Werkzeugteil (W1) der Randbereich (15) gelegen ist.

17. Vorrichtung zum Herstellen eines Formteils aus Kunststoff nach dem Anspruch 15 oder 16, **dadurch gekennzeichnet, dass** der Schieber (W4) von der Spitze (24) ausgehend hinter der keilförmigen Struktur (23) einen konkaven Konturabschnitt (25) aufweist, um einer Bewegung des Schiebers (W4) zum Randbereich (15) hin diesen aufzunehmen und diesen mit einer Krümmung zu versehen, durch den das Umklappen des Randbereichs (15) um den Rand (17) der Trägerschicht (11) zu unterstützen.

## Claims

1. Method for manufacturing a molded article, in particular for interior linings of vehicles with the use of a substrate layer (11) made of plastic, comprising a contact side and rear side that lies opposite to said contact side and a cover layer or decorative layer (12) in the form of a plastic film that is edge folded at least in an edge section of the substrate layer (11) comprising a visible side formed by a lamination foil and a rear side formed by a foam layer, the layers resting one on top of the other as an arrangement in a tool, the method comprising:
▪ inserting the substrate layer (11) with an inner area of the cover layer or decorative layer (12) and the substrate layer (11) between two tool parts of a tool, wherein the cover layer or decorative layer (12) with its visible side (12a) lies adjacent to the first tool part (W1) and the substrate layer (12) with its rear side lies adjacent to the second tool part sot that the connecting sides of the cover layer or decorative layer (12) and of the substrate layer (11) lie adjacent to each other, wherein an edge piece of the cover layer or decorative layer (12), which edge piece extend at least along a section of an outside edge of the cover layer or decorative layer (12), extends beyond a section of an outside edge (17) of the substrate layer (11), which section extends along said edge piece of the cover layer or decorative layer (12), thus forming an exposed rear area (13a),
▪ heating a heating tool (W3) and moving of the heated heating tool (W3) towards the exposed rear area (13a) of the edge piece (13), provided for edge folding, of the cover layer or decorative layer (12) that is joined to the substrate layer (11), for a predetermined period of time such that the surface area at the exposed rear area (13a) is melted,
▪ moving an edge-folding slider (W4) from a position in which a first side (23) of the edge-folding slider (W4) lies adjacent to the visible side of the edge piece of the cover layer or decorative layer (12) that extends beyond the outside edge section of the substrate layer (11), to a position in which a second side (21) of the edge-folding slider (W4) presses a section of the cover layer or decorative layer (12) against the outside edge (17) of the substrate layer (11), wherein edge piece (13) is swung in the direction of its edge-folding position,
▪ moving the edge-folding slider (W4) to a position in which an contour area (28) of the edge-folding slider (W4) lies adjacent to the visible sided (12a) of the cover layer or decorative layer (12), wherein the edge-folding slider (W4) is moved to this position in such a manner that the edge piece of the cover layer or decorative layer (12) that extends beyond the outside edge section of the substrate layer (11) with its melted rear side lies adjacent to the rear side of the substrate layer (11); and
▪ pressing the edge-folding slider (W4) with the contour area (28) to the visible side of the edge-folded edge piece (15) against the substrate layer (11) for bonding the cover layer or decorative layer (12) to the substrate layer (11) in the edge-folded area.

2. Method for manufacturing a molded article according to claim 1, **characterized in that** the tool to which the cover layer or decorative layer (12) and the substrate layer (11) are inserted, is a press-molding tool and that the cover layer or decorative layer (12) and the substrate layer (11) are inserted to the press-molding tool in such a manner that the edge piece of the cover layer or decorative layer (12), which edge piece extends beyond the outside edge section of the substrate layer (11), with the exposed rear area (13) lies outside the press contour surfaces of the tool parts, and that before to moving the edge-folding slider (W4) between two tool parts of a tool, the cover layer or decorative layer (12) and the substrate layer (11) are joined to each other by the two tool parts of the press forming tool by use of pressure and temperature.

3. Method for manufacturing a molded article according to one of the previous claims, **characterized in that** the cover layer or decorative layer (12) and the substrate layer (11) are inserted to the tool parts as hardened layers that are joined to each other by means of a press molding method.

4. Method for manufacturing a molded article according to one of the previous claims, **characterized in that** a polypropylene (PP) - bonded fiber mat is used as a starting material for the substrate layer (11).

5. Method for manufacturing a molded article according to one of the previous claims, **characterized in that** the cover layer or decorative layer (12) is formed of a film layer.

6. Method for manufacturing a molded article according to one of the previous claims, **characterized in that** the cover layer or decorative layer (12) is formed of TPO (Thermoplastic Polyolefin) or of PVC (Polyvinylchloride), and/or that that the cover layer or decorative layer (12) is formed of a lamination foil and in particular of a foam layer, formed of polypropylene (PP), that forms the rear side.

7. Method for manufacturing a molded article according to one of the previous claims, **characterized in that** the lamination foil of the cover layer or decorative layer (12) has a thickness of 0,3 mm to 0,7mm and that the foam layer of the cover layer or decorative layer (12) has a thickness of 1,0 mm to 3,0 mm.

8. Method for manufacturing a molded article according to one of the previous claims, **characterized in that** the heating tool (W3) is a heating belt and that the heating of a heating tool (W3) is carried out by resistance heating.

9. Method for manufacturing a molded article according to one of the previous claims, **characterized in that** the upper side of the edge-folding slider (W4) is lying adjacent to the visible side of the edge piece of the cover layer or decorative layer (12), which edge piece extends beyond the outside edge section of the substrate layer (11), while moving the heated heating tool (W3) towards the exposed rear area (13a) of the edge piece of the cover layer or decorative layer (12), which rear area is provided for being edge folded.

10. Method for manufacturing a molded article according to one of the previous claims, **characterized in that** the heating tool (W3) is contacted to the exposed rear area (13) of the edge piece of the cover layer or decorative layer (12), which rear area is provided for being edge folded, while moving the heated heating tool (W3) towards the exposed rear area (13a).

11. Method for manufacturing a molded article according to one of the previous claims, **characterized in that** the lamination foil of the cover layer or decorative layer (12) has a thickness of 0,3 mm to 0,7mm and that the foam layer of the cover layer or decorative layer (12) has a thickness of 1,0 mm to 3,0 mm and that the heating tool (W3) is pressed against the exposed rear area (13a) in such a manner that the foam layer gets a thickness of 0,1 mm to 0,2 mm.

12. Method for manufacturing a molded article according to one of the previous claims, **characterized in that** the tool facing the substrate layer (11) while melting the edge piece of the cover layer or decorative layer (12) is being heated to a temperature between 100 and 170 degree Celsius, wherein the spacing between outer side of the tool part (W2) and the rear side of the substrate layer (11) constitutes between 1,0 mm and 10,0 mm.

13. Device for manufacturing a molded article of plastic with spatial surface contour, in particular for interior linings of vehicles with the use of a substrate layer (11) and a cover layer or decorative layer (12) that is edge folded with an edge piece at least on an edge section of the substrate layer (11), the device comprising:
▪ two tool parts (W1, W2) for receiving an arrangement of the substrate layer (11) and the cover layer or decorative layer (12),
▪ a heating tool (W3), that is designed such and that is movable such that it movable toward an exposed rear area (13a) of the edge piece (15) of the cover layer or decorative layer (12) for melting the rear area (13a), said edge piece being provided for edge folding and said edge piece extending beyond the outside edge section of the substrate layer (11),
▪ a slider (W4),
▪ a movement mechanic, by means of which the slider (W4) can carry out a movement translational movement that is combined with a rotational movement in such a manner that the slider (W4) with a first side (23) can swing round the edge piece (15), that the slider (W4) subsequently with a second side (21) can press a section of the cover layer or decorative layer (12) against the outside edge (17) of the substrate layer (11) and that the slider (W4) can rest and press the edge piece of the cover layer or decorative layer (12), which edge piece extends beyond the outside edge section of the substrate layer (11), with its melted rear side against the rear side of the substrate layer (11).

14. Device for manufacturing a molded article according to claim 13, **characterized in that** the velocity of the slider (W4) during the movement along the tool contour (1) of the first tool (W1) can be adjusted by means of the movement mechanic and by means of the actuation mechanic.

15. Device for manufacturing a molded article according to claim 13 or 14, **characterized in that** the slider (W4) comprises a lower side (21) and a contour (23) that takes an inclined course starting from said lower side (21) with a tip (24) lying between the lower side (21) and the inclined contour (23), so that the lower side (21) and the inclined contour (23) form a wedge shaped slider cross section.

16. Device for manufacturing a molded article according to claim 14 or 15, **characterized in that** the slider (W4) on its rear side (24), which rear side (24) lies opposite to the front side (23) comprising the tip, comprises a contour area (28) that has the identical shape of cross section as the contour surface (28a) of the first tool part (W1) at a location of the tool part at which the edge portion (15) is situated in a positioning in the first tool part (W1) of the cover layer or decorative layer (12) and the substrate layer (11) that is provided for edge-folding, wherein said shape of the cross section of the contour area (28) is identical with the shape of cross section of the contour surface (28a) of the first tool part (W1) with a deviation of 15% maximum, in relation to the length of the tool lower side (21).

17. Device for manufacturing a molded article according to claim 15 or 16, **characterized in that** the slider (W4) comprises a concave contour section (25) lying behind the wedge shaped structure (23) seen from the tip (24), for receiving the edge area (15) while a movement of the slider (W4) towards said edge area (15) is carried out, and for fitting the edge area (15) with a curvature, and thereby supporting the edge-folding of the edge area (15) around the edge (17) of the substrate layer (11).

## Revendications

1. Procédé de fabrication d'une pièce moulée, en particulier pour des habillages intérieurs de véhicules, employant une couche porteuse (11) en plastique, présentant une face de pose et une face arrière opposée à celle-ci, et une couche de surface ou de décoration (12) sous forme d'un film plastique repliée au moins sur un tronçon de bord de la couche porteuse (11), présentant un film de surface formant une face visible et une couche de mousse formant une face qui reposent l'une sur l'autre en agencement dans un outil (W),
▪ placement de la couche porteuse (11) avec une partie intérieure de la couche de surface ou de décoration (12) et de la couche porteuse (11) entre deux parties d'un outil, sachant que la couche de surface ou de décoration (12) repose avec sa face visible (12a) sur une première partie d'outil (W1) et la couche porteuse (11) repose avec sa face arrière sur la deuxième partie d'outil, de telle sorte que les faces de liaison de la couche de surface ou de décoration (12) et de la couche porteuse (11) reposent l'une adjacent à l'autre, sachant qu'un bord de celles-ci s'étendant le long au moins d'un tronçon du bord extérieur de la couche de surface ou de décoration (12) s'étend au-delà du tronçon du bord extérieur (17) de la couche porteuse (11) passant le long de celle-ci, en formant une zone de face arrière (13a) dégagée avec une couche de mousse dégagée,
▪ chauffage d'un outil de chauffage (W3) et approche de l'outil de chauffage (W3) chauffé sur la zone de face arrière (13a) dégagée du bord (13), prévu pour la formation du pliage, de la couche de surface ou de décoration (12) reliée à la couche porteuse (11) à un temps prédéfini de telle sorte que la zone de surface de la zone de face arrière (13a) dégagée soit fondue,
▪ déplacement d'une barre de pliage (W4) d'une position dans laquelle un premier coté (23) de la barre de pliage sur la face visible du bord de la couche de surface ou de décoration (12) s'étendant au-delà du tronçon de bord extérieur de la couche porteuse (11), à une position dans laquelle une seconde face (21) de la barre de pliage appuie un tronçon de la couche de surface ou de décoration (12) sur le bord extérieur (17) de la couche porteuse (11), sachant que le bord est pivoté en direction de sa position de pliage,
▪ déplacement de la barre de pliage (W4) dans une position dans laquelle une zone de contour (28) de la barre de pliage repose sur la face visible (12a) de la couche de surface ou de décoration (12), sachant que la barre de pliage (W4) est ainsi déplacée dans cette position que le bord (13) de la couche de surface ou de décoration (12) s'étendant au-delà du tronçon de bord extérieur de la couche porteuse (11) repose avec sa face arrière fondue adjacent à la face arrière de la couche porteuse (11) ; et
▪ compression de la barre de pliage avec une zone de contour (28) sur la face visible de la partie de bord pliée (15) contre la couche porteuse (11) pour coller la couche de surface ou de décoration (12) avec la couche porteuse (11) dans la zone pliée.

2. Procédé de fabrication d'une pièce moulée selon la revendication 1, **caractérisé en ce que** l'outil dans lequel la couche de surface ou de décoration (12) et la couche porteuse (11) sont placées, est un outil de moulage par compression et que la couche de surface ou de décoration (12) et la couche porteuse (11) sont placées dans l'outil de moulage par compression en tant que couches formant une natte, de telle sorte que le bord de la couche de surface ou de décoration (12) s'étendant au-delà du tronçon de bord extérieur de la couche porteuse (11) repose avec la zone de face arrière (13a) dégagée hors des surfaces de contour de compression des parties d'outil, et qu'avant de déplacer la barre de pliage (W4) entre deux parties d'outil, la couche de surface ou de décoration (12) et la couche porteuse (11) sont reliées entre elles par application de pression et de température par les deux parties de l'outil de moulage par compression.

3. Procédé de fabrication d'une pièce moulée selon la revendication 1 ou 2, **caractérisé en ce que** la couche de surface ou de décoration (12) et la couche porteuse (11) sont placées dans les parties d'outil en tant que couches durcies et reliées entre elles par un procédé de moulage par compression.

4. Procédé de fabrication d'une pièce moulée selon l'une des revendications précédentes, **caractérisé en ce qu'**une natte fibreuse liée en polypropylène (PP) est employée comme matériau de départ pour la couche porteuse (11).

5. Procédé de fabrication d'une pièce moulée selon l'une des revendications précédentes, **caractérisé en ce que** la couche de surface ou de décoration (12) est formée dans une couche de film.

6. Procédé de fabrication d'une pièce moulée selon l'une des revendications précédentes, **caractérisé en ce que** la couche de surface ou de décoration (12) est en TPO (polyoléfine thermoplastique) ou en PVC (chlorure de polyvinyle) et/ou que la couche de surface ou de décoration (12) est formée par un film de surface et une couche de mousse formée en particulier en polypropylène (PP) qui forme la face arrière.

7. Procédé de fabrication d'une pièce moulée selon l'une des revendications précédentes, **caractérisé en ce que** le film de surface de la couche de surface ou de décoration (12) présente une épaisseur de 0,3 mm à 0,7 mm et la couche de mousse de la couche de surface ou de décoration (12) présente une épaisseur de 1,0 mm à 3,0 mm.

8. Procédé de fabrication d'une pièce moulée selon l'une des revendications précédentes, **caractérisé en ce que** l'outil de chauffage (W3) est un ruban chauffant et que le chauffage d'un outil de chauffage (W3) a lieu par chauffage par résistance.

9. Procédé de fabrication d'une pièce moulée selon l'une des revendications précédentes, **caractérisé en ce que** lors de l'approche de l'outil de chauffage (W3) sur la zone de face arrière (13a) dégagée du bord (13) de la couche de surface ou de décoration (12) prévu pour la formation du pliage, la face supérieure de la barre de pliage (W4) repose adjacent à la face visible du bord (13) de la couche de surface ou de décoration (12) s'étendant au-delà du tronçon de bord extérieur de la couche porteuse (11).

10. Procédé de fabrication d'une pièce moulée selon l'une des revendications précédentes, **caractérisé en ce que** lors de l'approche de l'outil de chauffage (W3) sur la zone de face arrière (13a) dégagée du bord (13) de la couche de surface ou de décoration (12) prévu pour la formation du pliage, l'outil de chauffage (W3) est mis en contact avec la zone de face arrière (13a) dégagée.

11. Procédé de fabrication d'une pièce moulée selon l'une des revendications précédentes, **caractérisé en ce que** le film de surface de la couche de surface ou de décoration (12) présente une épaisseur de 0,3 mm à 0,7 mm et la couche de mousse de la couche de surface ou de décoration (12) présente une épaisseur de 1,0 mm à 3,0 mm, et que l'outil de chauffage (W3) est ainsi comprimé sur la zone de face arrière (13a) dégagée que la couche de mousse obtient une épaisseur de 0,1 à 0,2 mm.

12. Procédé de fabrication d'une pièce moulée selon l'une des revendications précédentes, **caractérisé en ce que** lors de la fonte du bord de la couche de surface ou de décoration (12), la partie d'outil tournée vers la face arrière de la couche porteuse (11) est chauffée à une température entre 100 et 170 degrés Celsius, sachant que l'écart entre la face extérieure de la partie d'outil (W2) et la face arrière de la couche porteuse (11) est situé entre 1,0 et 10,0 mm.

13. Dispositif de fabrication d'une pièce moulée en plastique comprenant des contours de surface spatiaux, en particulier pour des habillages intérieurs de véhicules en employant une couche porteuse (11) en plastique et une couche de surface ou de décoration (12) rabattue par une partie de bord (15) au moins sur un tronçon de bord de la couche porteuse (11), présentant :
▪ deux parties d'outil (W1, W2) pour recevoir un agencement de la couche porteuse (11) et de la couche de surface ou de décoration (12),
▪ un outil de chauffage (W3) ainsi conçu et pouvant être déplacé que celui-ci peut être approché d'une zone de face arrière (13a) dégagée de la partie de bord (15) de la couche de surface ou de décoration (12) prévu pour la formation du pliage et s'étendant au-delà du tronçon de bord extérieur de la couche porteuse (11), pour fondre la zone de face arrière (13a),
▪ une barre (W4),
▪ une mécanique de déplacement avec laquelle la barre (W4) peut exécuter un mouvement de translation superposé par un mouvement de rotation de telle sorte que la barre (W4) peut faire pivoter la partie de bord (15) par une première face (23), comprimer ensuite un tronçon de la couche de surface ou de décoration (12) sur le bord extérieur (17) de la couche porteuse (11) par une seconde face (21), et placer et comprimer le bord de la couche de surface ou de décoration (12) s'étendant au-delà du tronçon de bord extérieur de la couche porteuse (11) avec sa face arrière fondue sur la face arrière de la couche porteuse (11).

14. Dispositif de fabrication d'une pièce moulée en plastique selon la revendication 13, **caractérisé en ce que** la vitesse de la barre (W4) lors du mouvement le long du contour d'outil (1) du premier outil (W1) peut être réglée avec la mécanique de mouvement et la mécanique d'actionnement.

15. Dispositif de fabrication d'une pièce moulée en plastique selon la revendication 13 ou 14, **caractérisé en ce que** la barre (W4) présente une sous-face (21) et un contour (23) partant en biais depuis celle-ci avec la pointe (24) placée entre elles, de telle sorte que la sous-face (21) et le contour (23) de biais forment une section de barre cunéiforme.

16. Dispositif de fabrication d'une pièce moulée en plastique selon la revendication 14 ou 15, **caractérisé en ce que** la barre (W4) présente sur sa face arrière (27) qui est placée à l'opposé de la face avant (26) de celle-ci présentant la pointe (24), une zone de contour (28) qui a la même forme de section transversale, avec un écart vertical de celle-ci de maximum 15 % rapporté à la longueur de la sous-face (21) d'outil, que la surface de contour (28a) de la première partie d'outil (W1) en un point sur lequel la partie de bord (15) est placée lorsque la couche de décoration (12) et de la couche porteuse (11) sont positionnées de façon définie dans la première partie d'outil (W1) pour la formation du pliage.

17. Dispositif de fabrication d'une pièce moulée en plastique selon la revendication 15 ou 16, **caractérisé en ce que** la barre (W4) présente en partant de la pointe (24) un tronçon de contour (25) concave derrière la structure cunéiforme (23), pour recevoir celui-ci dans un mouvement de la barre (W4) en direction de la partie de bord (15) et le doter d'une courbure permettant de soutenir le pliage de la partie de bord (15) autour du bord (17) de la couche porteuse (11).
